(19) Europäisches Patentamt
European Patent Office
Office européen des brevets

(11) **EP 3 491 073 B1**

(12) **EUROPEAN PATENT SPECIFICATION**

(45) Date of publication and mention
of the grant of the patent:
**20.10.2021 Bulletin 2021/42**

(21) Application number: **17742210.2**

(22) Date of filing: **11.07.2017**

(51) Int Cl.:
**C09D 5/00** $^{(2006.01)}$

(86) International application number:
**PCT/EP2017/067343**

(87) International publication number:
**WO 2018/019564 (01.02.2018 Gazette 2018/05)**

(54) **SURFACE TREATMENT COMPOSITION CAPABLE OF IMPARTING UNDERWATER STAIN REPELLENCY**

OBERFLÄCHENBEHANDLUNGSZUSAMMENSETZUNG ZUR VERLEIHUNG VON UNTERWASSERFLECKENABWEISUNG

COMPOSITION DE TRAITEMENT DE SURFACE CAPABLE DE CONFÉRER UNE RÉSISTANCE AUX TACHES SOUS-MARINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2016 EP 16181281**

(43) Date of publication of application:
**05.06.2019 Bulletin 2019/23**

(73) Proprietors:
• **Unilever Global IP Limited**
**Wirral, CH62 AZD (GB)**
Designated Contracting States:
**CY DE GB IE IT MT**
• **Unilever IP Holdings B.V.**
**3013 AL Rotterdam (NL)**
Designated Contracting States:
**AL AT BE BG CH CZ DK EE ES FI FR GR HR HU IS LI LT LU LV MC MK NL NO PL PT RO RS SE SI SK SM TR**

(72) Inventors:
• **DAS, Somnath**
**Bangalore 560 066 (IN)**
• **VAIDYA, Ashish, Anant**
**Bangalore 560 066 (IN)**

(74) Representative: **Tansley, Sally Elizabeth**
**Unilever N.V.**
**Unilever Patent Group**
**Bronland 14**
**6708 WH Wageningen (NL)**

(56) References cited:
EP-A1- 1 193 056        DE-A1- 10 334 574
JP-A- H0 625 555        US-A1- 2008 177 022
US-A1- 2010 159 256     US-A1- 2012 251 718
US-B1- 6 180 248

## Description

## Technical Field of the Invention

The present invention relates to a surface treatment composition that can be used to impart underwater stain repellency to surfaces by treating such surfaces with said surface treatment composition. The surface treatment composition of the present invention contains a reactive polymer comprising a hydrophilic polymer residue and a silane coupling group.

## Summary of the Invention

A liquid droplet in contact with a flat, solid surface does so with a contact angle characteristic of both the liquid and the solid in question according to the Young's equation:

$$\gamma_{SG} - \gamma_{SL} - \gamma_{LG}\cos\theta_c = 0$$

where $\gamma_{SG}$, $\gamma_{SL}$, and $\gamma_{LG}$ are the solid-vapor, solid-liquid, and liquid-vapor surface tensions respectively, and $\theta$ is the contact angle of the droplet.

The solid-liquid interactions can be enhanced through the use of surface roughness. Increasing the surface area in contact with the droplet leads to amplification of the solid-liquid interaction, repellent surfaces therefore become more repellent or liquids spread further on non-repellent surfaces. This assumes that the surface is fully wetted by the liquid and is known as the "Wenzel regime". Another scenario when considering droplets on rough surfaces is that air pockets become trapped between the surface and the liquid resulting in a composite interface known as the "Cassie-Baxter regime". In this case the surface typically becomes more repellent since the droplet is resting partially on air pockets. Therefore, it is possible for non-repellent surfaces to become repellent through an increase in roughness and the formation of a composite air/solid interface.

Superoleophobic surfaces are of interest for anti-fouling, self-cleaning, anti-smudge, low-drag, anti-fog, and oil-water separation applications. Current bioinspired surfaces are of limited use due to a lack of mechanical durability.

Many examples of superoleophobic surfaces exist; these typically involve a fluorinated component to provide the low surface tension and a roughness component to enhance the liquid-solid interactions. An early example used rough, oxidized aluminium surfaces immersed in fluorinated monoalkylphosphate;; resulting in oil and water contact angles of 150°. A fluorinated polyhedral oligomeric silsesquioxane has been used in various scenarios - including electrospinning and coating re-entrant structures - to create a superoleophobic coating. However, a superoleophobic surface with good mechanical durability typically has not been demonstrated. Poor durability can be due to the "one-pot" technique typically utilized, where the low surface tension material required for oleophobicity is distributed throughout the coating, compromising adhesion to the substrate.

Superoleophobic composite surfaces are typically superhydrophobic as well; a surface that repels oil usually also repels water since water has a higher surface tension.

Ghosh et al. (Surface Chemical Modification of Poly(dimethylsiloxane)-Based Biomimetic Materials: Oil-Repellent Surfaces; Appl. Mater. Interfaces (2009), 1(11), 2636-2644) describes an experiment in which the oil-repellent performance of a poly(dimethylsiloxane)-based biomimetic replica (PDMS-replica) was tuned by modifying its surface chemical composition. PDMS-replica possessing a complementary combination of hierarchical roughness and mixed -$CF_3$ and -$SiCH_3$ terminal functionality was prepared in the presence of a surface-modifying agent, using nanocasting based on soft lithography. PDMS-replica showed superhydrophobicity and enhanced oil repellency, $\theta_{oil}$ ~ 86°. PDMS-replica was further modified with silica nanoparticles followed by chemical vapor deposition of (heptadecafluoro-1,1,2,2-tetrahydrodecyl)trichlorosilane. The -$CF_3$ terminal, silica-modified PDMS-replica (i.e., PDMS-replicasilica/$CF_3$) showed both superhydrophobic and high oil-repellent properties (advancing $\theta_{oil}$ ~ 120°).

Ghosh et al. (Water-Based Layer-by-Layer Surface Chemical Modification of Biomimetic Materials: Oil Repellency, Appl. Mater. Interfaces (2013), 5(18), 8869-8874) report surface chemical modification of biomimetic materials through water-based layer-by-layer deposition. An amine terminated biomimetic replica PDMS-replicaSilica/$NH_2$ was prepared by treating silica-modified replica (i.e., PDMS-replicaSilica) with an aqueous solution of branched ethoxylated polyethylenimine (EPEI). Next, -$CF_3$ terminal PDMS-replicaSilica/$NH_2$/$CF_3$ was obtained by treating PDMS-replicaSilica/$NH_2$ with the aqueous solution of phosphate ester fluorosurfactant. PDMS-replicaSilica/$NH_2$/$CF_3$ showed superhydrophobicity (advancing $\theta_{water} \approx 140°$) and high oil repellency (advancing $\theta_{oil} \approx 110°$). X-ray photoelectron spectroscopy (XPS) revealed well-organized terminal -$CF_3$ groups present on the PDMS-replicaSilica/$NH_2$/$CF_3$ surface.

The aforementioned oil repellent surfaces suffer from the drawback that they tend to attract oil or hydrophobic stains when placed under water.

US 2008/0177022 describes a hydrophilic film forming composition comprising:

- an alkylene oxide compound comprising at least 2 hydroxyl groups in the molecule thereof;
- an alkoxide compound comprising an element selected from Si, Ti, Zr and Al; and
- a hydrophilic polymer comprising a silane coupling group at the polymer terminal.

US 2010/0159256 describes a composition for forming a hydrophilic film, comprising:

- a hydrophilic polymer having a silane coupling group at a terminal or on a side chain of the polymer; and
- a metal complex catalyst.

US 2012/0251718 A1 (Intermolecular INC) discloses a method of forming low RI conformal coatings on textured transparent surfaces like glass. The method comprises coating the textured glass substrate with a sol-gel composition comprising a solidifier. It is believed that use of the solidifier expedites the sol-gel transition point of the sol-gel composition leading to more conformal deposition of coatings on textured substrates. Silicones are disclosed as being a component of the sol-gel composition but the silicone compounds are not made reactive by interlinking with polymers.

DE10334574 A1 (Henkel, 2005) discloses a polymer dispersion wherein the components of a physical mixture comprising (i) at least one unsaturated silane of the general formula (I): $[H_2C-CX(Y)_n]Si(CH_3)_p(R)_{3-p}$ in which X is a hydrogen atom or a methyl group, Y is a divalent group selected from $-CH_2-$ and $-C(O)O-(CH_2)_3-$, n is 0 or 1, R is an alkoxy group selected from methoxy, ethoxy, n-propoxy, isopropoxy, n-butoxy, isobutoxy, and 2-methoxyethoxy, and p is 0 or 1, and (ii) at least one organosilane of the general formula (II): $R^1Si(CH_3)_q(R^2)_{3-q}$ in which $R^1$ is a linear, branched or cyclic alkyl group having 1 to 18 carbon atoms or is an aryl group or is a polyether group, $R^2$ is an alkoxy group selected from methoxy, ethoxy, n-propoxy, isopropoxy, n-butoxy, isobutoxy and 2-methoxyethoxy, and q is 0 or 1, and/or at least one silicic ester of the general formula (III): $Si(R^3)_4$, in which groups $R^3$ are identical or different and $R^3$ is an alkoxy group selected from methoxy, ethoxy, n-propoxy, isopropoxy, n-butoxy and isobutoxy, are incorporated into the framework of the polymer, a process for preparing such a polymer dispersion, and its use. The invention disclosed in this publication is based on the observation that even physical mixtures of (i) unsaturated silane and (ii) organosilane and/or silicic esters can be copolymerized readily and effectively, thereby, with unexpected advantage, allowing the crosslinking density of the polymer dispersion to be increased and at the same time the water resistance of the applied polymer dispersion improved. The copolymerization, crosslinking and/or partial condensation--that is, the incorporation of components (i) and (ii) into the framework of the polymer--produce further advantageous improvements in the subsequent film binding properties.

US2002098364A (IBM) discloses a method for fabricating silicone elastomer stamps with hydrophilic surfaces for micro contact printing. The concept of polymer grafting is used to produce the stamps. The stamps thus produced have the advantage that grafting of a thin hydrophilic polymer on a hydrophobic PDMS surface can render PDMS stamps permanently hydrophilic. With such stamps it becomes possible to print aqueous or highly polar inks reproducibly over days and weeks. It has been disclosed that control over the chemical composition of the hydrophilic layer is equally important to maximize uptake of the relevant species from the ink and to prevent or minimize unwanted side reactions. The hydrophilic layer should also be grafted or deposited employing a chemistry that does not damage the stamp and preserves the accuracy of its dimensions and micropattern. The illustrated silicone based compounds do not contain residue of a hydrophilic polymer selected from polyethylene glycol, polypropylene glycol, polyvinyl alcohol, poly(vinylpyrrolidone), polysaccharides.

US6180248 A (PPG Industries, 2001) discloses a method to combine the mechanical strength and stability of inorganic materials with the flexibility and film-forming ability of organic materials. It discloses organic-inorganic hybrid polymers prepared by hydrolytic condensation polymerization of an organoalkoxysilane in the presence of a water soluble organic polymer such as polyvinylpyrrolidone, preferably with an alkali metal carboxylic acid. However, a linker appears to not disclosed.

JPH062555 A (Mitsubishi Rayon, 1994) a composition containing a specific colloidal silica, a specific organoalkoxysilane, a specific (meth)acrylate, a specific polymerizable monomer, a thiocyanic acid metallic salt and an active energy beam-inductive catalyst in a specific ratio. The composition is durable and useful for moldings.

## Summary of the Invention

The inventors have developed a surface treatment composition that can be used to impart underwater stain repellency to surfaces by treating such surfaces with said surface treatment composition.

The surface treatment composition of the present invention contains a reactive polymer comprising a hydrophilic polymer residue and a silane coupling group, said reactive polymer being represented by formula (I):

$$(R^1O)_i(R^2)_{3-i}Si\text{-}R^3\text{-}X\text{-pol} \qquad (I)$$

wherein:

$R^1$ and $R^2$ are each independently selected from hydrogen atom and optionally substituted $C_{1-20}$ alkyl;

$R^3$ is selected from substituted and unsubstituted $C_{1-12}$ alkylenes;

X is a linker group;

pol is a residue of a hydrophilic polymer selected from polyethylene glycol, polypropylene glycol, polyvinyl alcohol, poly(vinylpyrrolidone), polysaccharides and copolymers thereof;

i = 1, 2 or 3;

wherein the composition contains 0.01 to 10 wt% of the reactive polymer; and

wherein the composition contains one or more other ingredients selected from abrasives, surfactants, antibacterial agents, flavourants and remineralizers.

When the surface treatment composition of the present invention is used to treat a surface, e.g. teeth enamel, the silane coupling group of the reactive polymer reacts with reactive group on said surface, thereby altering the surface properties. As a result, the treated surface, when placed under water, effectively repels stains.

The invention also relates to the use of the aforementioned surface treatment composition for imparting stain repellency to a surface and/or for imparting antimicrobial properties to a surface, said use comprising treating said surface with the surface treatment composition.

## Detailed Description of the Invention

A first aspect of the present invention relates to a surface treatment composition capable of imparting underwater stain repellency to surfaces, said composition containing a reactive polymer represented by formula (I):

$$(R^1O)_i(R^2)_{3-i}Si\text{-}R^3\text{-}X\text{-pol} \qquad (I)$$

wherein:

$R^1$ and $R^2$ are each independently selected from hydrogen atom and optionally substituted $C_{1-20}$ alkyl;

$R^3$ is selected from substituted and unsubstituted $C_{1-12}$ alkylenes;

X is a linker group;

pol is a residue of a hydrophilic polymer selected from polyethylene glycol, polypropylene glycol, polyvinyl alcohol, poly(vinylpyrrolidone), polysaccharides and copolymers thereof;

i = 1, 2 or 3;

wherein the composition contains 0.01 to 10 wt% of the reactive polymer; and

wherein the composition contains one or more other ingredients selected from abrasives, surfactants, antibacterial agents, flavourants and remineralizers.

According to a preferred embodiment, the hydrophilic polymer residue is a residue of a polymer selected from polyethylene glycol, polypropylene glycol and copolymers thereof. Most preferably, the polymer residue is polyethylene glycol residue.

Typically, the hydrophyilic polymer residue has a degree of polymerization of more than 3 (n>3), more preferably a degree of polymerization of more than 10 (n>10) and most preferably a degree of polymerization of more than 20 (n>20); "n" being the number of monomeric units.

$R^1$ in formula (I) is preferably selected from hydrogen atom and optionally substituted $C_{1-5}$ alkyl. More preferably, $R^1$ is selected from hydrogen atom, methyl, ethyl, n-propyl and iso-propyl. Even more preferably $R^1$ is selected from hydrogen atom, methyl and ethyl. Most preferably, $R^1$ is methyl.

The residues $R^1O$- in formula (I) are capable of reacting with reactive groups on various surfaces that may be treated with the present composition. Examples of reactive groups on the surface that can react with $R^1O$-residues include hydroxyl (SiOH and -CHOH, $CH_2OH$), and silicon hydride (-SiH).

$R^2$ in formula (I) is preferably selected from hydrogen atom and optionally substituted $C_{1-5}$ alkyl. More preferably, $R^2$ is selected from hydrogen atom, methyl, ethyl, n-propyl and iso-propyl. Even more preferably $R^2$ is selected from hydrogen atom, methyl and ethyl.

Preferably, $R^3$ in formula (i) is selected from substituted and unsubstituted $C_{1-5}$ alkylenes, more preferably from unsubstituted $C_{1-5}$ alkylenes, most preferably from unsubstituted $C_{2-4}$ alkylenes.

X in formula (I) preferably represents $NR^4$, O, S or P, wherein $R^4$ represent hydrogen atom or $C_{1-3}$ alkyl. More

preferably X represents $NR^4$ or O. Even more preferably X represent $NR^4$, wherein $R^4$ represent hydrogen atom or $C_{1-3}$ alkyl. Most preferably, X represents NH.

The integer i in formula (I) preferably represents 2 or 3, most preferably 3.

The surface treatment composition of the present invention may be provided in different forms, such as a paste, a gel, a liquid or a powder. Preferably, the surface treatment composition is in the form of a paste, a gel or a liquid. More preferably, the surface treatment composition is in the form of a paste or a gel. Most preferably, the composition is in the form of a paste.

The surface treatment composition contains 0.01-10 wt.% of the reactive polymer. More preferably, the composition contains 0.1 to 6 wt.% and most preferably 0.5 to 3 wt.% of the reactive polymer.

Examples of surface treatment compositions encompassed by the present invention toothpastes, tooth powders, mouthwashes, hard surface cleaning compositions, toilet cleaning compositions and household cleaning compositions. According to a preferred embodiment, the surface treatment composition is a toothpaste, a tooth powder or a mouthwash. Most preferably, the surface treatment composition is a toothpaste.

Besides the reactive polymer, the toothpaste contains one or more other ingredients selected from abrasives (e.g. particles of aluminum hydroxide ($Al(OH)_3$), calcium carbonate ($CaCO_3$), various calcium hydrogen phosphates, various silicas and zeolites, and hydroxyapatite ($Ca_5(PO_4)_3OH$).), fluorides (e.g.NaF, $SnF_2$, $Na_2PO_3F$), surfactants (e.g. sodium lauryl sulfate), antibacterial agents ($ZnCl_2$), flavourants (e.g. peppermint, spearmint or wintergreen) and remineralizers (hydroxyapatite nanocrystals and calcium phosphates). Preferably, the toothpaste contains at least two, more preferably at least three and most preferably at least four of the aforementioned ingredients.

Unlike the compositions described in US 2010/0159256, the surface treatment composition of the present invention preferably contains no metal complex catalyst.

Unlike the compositions described in US 2008/0177022 and US 2010/0159256, the surface composition preferably does not contain an alkoxide compound of an element selected from Si, Ti, Zr and Al.

The reactive polymer that is employed in accordance with the present method may suitably be prepared by covalently linking a silane coupling agent to a hydrophilic polymer. The silane coupling agent employed is represented by the following formula (II):

$$(R^1O)_i(R^2)_{3-i}Si-R^3-Y \qquad (II)$$

wherein:

   $R^1$, $R^2$ and $R^3$ have the same meaning as defined herein before;
   Y is a reactive group selected from vinyl, alkene, epoxy, amine and mercapto; and
   i has the same meaning as defined herein before.

Preferably, the reactive group Y in formula (II) is selected from epoxy and amine. More preferably, the reactive group Y is an amine group, most preferably a primary amine group.

The hydrophilic polymer employed in the preparation of the reactive preferably contains one or more reactive groups selected from a hydroxyl, epoxy, thiol, vinyl and chlorohydroxy, More preferably, the reactive hydrophilic polymer contains one or more reactive groups selected from thiol, epoxy and amine. Most preferably, the reactive hydrophilic polymer contains a reactive group in the form of an epoxy residue.

According to a particularly preferred embodiment, the reactive group of the hydrophilic polymer is a terminal group, e.g .a terminal epoxy group.

Another aspect of the present invention relates to the use of a surface treatment composition according to the present invention for imparting stain repellency to a surface and/or for imparting antimicrobial properties to a surface, said use comprising treating said surface with the present surface treatment composition.

The surface that is treated with the surface treatment composition preferably comprises reactive groups selected from hydroxyl (SiOH and -CHOH, $CH_2OH$), and silicon hydride (-SiH). Most preferably, said surface comprises reactive groups in the form of hydroxyl groups, most preferably in the form of SiOH groups.

In accordance with a particularly preferred embodiment, the surface that is to be treated with the surface treatment composition is primarily (>50 wt.%) composed of apatite, ceramic, marble or metal. More preferably, said surface is composed of apatite, ceramic or marble. Even more preferably, the surface is composed of apatite, most preferably of hydroxyapatite. Hydroxyapatite is the primary component of tooth enamel.

A particularly preferred embodiment of the present use comprises the application of the surface treatment composition onto the teeth of a human, most preferably using a tooth brush.

According to another particularly preferred embodiment, the surface that is treated with the surface treatment composition of the present invention is subjected to a surface roughening treatment before the treatment with the surface treatment composition. The inventors have found that such a pretreatment can substantially enhance the effectiveness

EP 3 491 073 B1

of the treatment with the surface treatment compositions.

Examples of surface roughening treatments that may be employed include chemical etching, sandblasting, lithographic patterning, 3D printing and combinations thereof. Most preferably, the surface roughening treatment comprises chemical etching. In case the surface to be treated is tooth enamel, dental etching techniques known in the art are preferably applied before the treatment with the surface treatment composition.

The use of the present invention preferably yields a treated surface having an oil contact angle under water of more than 80 degrees, more preferably of 90-155 degrees, most preferably of 110-150 degrees.

The treated surface obtained in accordance with the present use typically has an interfacial energy under water of 10-35 dynes/cm. More preferably, the treated surface has an interfacial energy under water of 20-30 dynes/cm, most preferably of 22-28 dynes/cm.

The invention is further illustrated by the following non-limiting examples.

### EXAMPLES

### Example 1

Hydroxyapatite (HAP) disk (Ex. Clarkson Chromatography Products Inc, USA cat No CDHAD- 50-Krishgen) was introduced in a 50 mL glass beaker. 10 ml of 37% orthophosphoric acid solution was added. The HAP disk was left in contact with the acid solution for 10 minutes, to ensure sufficient etching and to generate micro roughness on the surface. The etched HAP disk ($HAP_{et}$) was rinsed with water three times and dried at 80 °C for 5 hours.

Etched and unetched HAP disk ($HAP_{et}$) were treated with 5% (w/v) (3-Aminopropyl) trimethoxysilane (APTES, 97% pure from Aldrich) in methanolic solution for 2 hours. The amine treated disk was rinsed with methanol 3 times to ensure removal of excess APTES. Subsequently, the amine functionalized HAP disk was treated with epoxy functionalized polyalkylene glycol for 4 hours. The polymer tagged etched HAP ($HAP_{et}$-poly) was rinsed with tetrahydrofuran and dried under nitrogen atmosphere.

The epoxy functionalized polyalkeylene glycol had previously been synthesized as follows:
5.0 g of polyalkylene glycol monoallyl ethers $[CH_2=CHCH_2(OCH_2CH_2)_n(OCH_2CH(CH_3))_mOH]$ (1 equivalent), where n=19, m=5 was dissolved in 90 mL of toluene taken in a 100 mL two-necked dry round bottom flask attached to a Dean Stark apparatus which was connected to a water condenser. Nitrogen was continuously purged to the reaction mixture using a Schlenk line. The reaction mixture was stirred at 140°C for 3 h. After making the reaction mixture completely dry, the temperature of the system was brought down to 25°C. 0.639 g (1.5 equivalents) of 3-Chloroperbenzoic acid (MCPBA) was then added to the reaction mixture and was stirred at 25°C for about 60 h. The progress of the epoxidation reaction was monitored using thin layer chromatography. After completion of the reaction, the solvent was evaporated using a rotary evaporator and a yellow viscous liquid was obtained. The product was purified using 5% aqueous solution of $NaHCO_3$. The organic layer was washed with hexane-ethyl acetate (12:7 v/v ratios) solvent mixture. The solvent was evaporated under vacuum after treating it with sodium sulfate and a colorless viscous liquid was obtained.

### Example 2

The hydroxyapatite disks prepared in Example 1 were immersed in 1 mL black tea (Brooke Bond Taj Mahal, Ex. HUL) taken in a 12 well plate and allowed to stand for 4 hours, the disks were washed with distilled water and dried in air.

LAB measurements were done to ascertain the extent of tea stain adhering to the hydroxyapatite disks. In an LAB measurement, higher the L value, lower is the extent of adherence of stain. The results are shown in Table 1.

**Table 1**

| Material | L |
|---|---|
| untreated hydroxyapatite (HAP) | 51 |
| untreated etched HAP ($HAP_{et}$) | 50 |
| polymer tagged HAP (HAP-poly) | 54 |
| polymer tagged etched HAP ($HAP_{et}$-poly) | 60 |

### Example 3

Triethoxysilane functionalised polyalkenylglycol was synthesized in two steps as described below.

*Step a) synthesis of epoxy terminal polyalkenylglycol*

5.0 g of polyalkylene glycol monoallyl ethers [$CH_2=CHCH_2(OCH_2CH_2)_n(OCH_2CH(CH_3))_mOH$](1 equivalent), where n=19, m=5 was dissolved in 90 mL of toluene taken in a 100 mL two-necked dry round bottom flask attached to a Dean Stark apparatus which was connected to a water condenser. Nitrogen was continuously purged to the reaction mixture using a Schlenk line. The reaction mixture was stirred at 140°C for 3 h. After making the reaction mixture completely dry, the temperature of the system was brought down to 25°C. 0.639 g (1.5 equivalents) of 3-Chloroperbenzoic acid (MCPBA) was then added to the reaction mixture and was stirred at 25°C for about 60 h. The progress of the epoxidation reaction was monitored using thin layer chromatography. After completion of the reaction, the solvent was evaporated using a rotary evaporator and a yellow viscous liquid was obtained. The product was purified using 5% aqueous solution of $NaHCO_3$. The organic layer was washed with hexane-ethyl acetate (12:7 v/v ratios) solvent mixture. The solvent was evaporated under vacuum after treating it with sodium sulfate and a colorless viscous liquid was obtained.

*Step b) Reaction of epoxy terminal polyalkenylglycol with aminopropyltriethoxysilane*

5 g of epoxy terminal polyalkenylglycol was taken in 100 ml round bottom flask followed by addition of 50 ml HPLC grade toluene. 20 ml of toluene was distilled azeothropically under nitrogen to ensure complete removal of moisture. Subsequently, molar equivalent amount of (3-Aminopropyl) trimethoxysilane (APTES, 97% pure from Aldrich) was added. The reaction mixture was refluxed for 5 hours. The epoxy ring opening was monitored using NMR. After the completion of the reaction, toluene was evaporated to dryness.

The triethoxysilane functionalised polyalkenylglycol so obtained can suitably be used to improve the underwater stain repellency of surfaces such as enamel.

## Claims

1. A surface treatment composition capable of imparting underwater stain repellency to surfaces, said composition containing a reactive polymer represented by formula (I):

   $$(R^1O)_i(R^2)_{3-i}\text{-Si-R}^3\text{-X-pol} \qquad (I)$$

   wherein:

   $R^1$ and $R^2$ are each independently selected from hydrogen atom and optionally substituted $C_{1-20}$ alkyl;
   $R^3$ is selected from substituted and unsubstituted $C_{1-12}$ alkylenes;
   X is a linker group;
   pol is a residue of a hydrophilic polymer selected from polyethylene glycol, polypropylene glycol, polyvinyl alcohol, poly(vinylpyrrolidone), polysaccharides and copolymers thereof;
   i = 1, 2 or 3;
   wherein the composition contains 0.01 to 10 wt% of the reactive polymer; and
   wherein the composition is a toothpaste, a tooth powder or a mouthwash.

2. Composition according to claim 1, wherein the hydrophilic polymer residue is a residue from a polymer selected from polyethylene glycol, polypropylene glycol and copolymers thereof.

3. Composition according to claim 1 or 2, wherein X represents $NR^4$, O, S or P, wherein $R^4$ represent hydrogen atom or $C_{1-3}$ alkyl.

4. Composition according to any one of the preceding claims, wherein $R^1$ is selected from hydrogen atom and optionally substituted $C_{1-5}$ alkyl.

5. Composition according to any one of the preceding claims, wherein $R^2$ is selected from hydrogen atom and optionally substituted $C_{1-5}$ alkyl.

6. Composition according to any one of the preceding claims, wherein the composition is a paste, a gel, a liquid or a powder.

7. Composition according to any one of the preceding claims, wherein the composition is a toothpaste.

8. Use of a surface treatment composition according to any one of the preceding claims for imparting stain repellency to a surface and/or for imparting antimicrobial properties to a surface, said use comprising treating said surface with the surface treatment composition.

9. Use according to claim 8, wherein the surface is subjected to a surface roughening treatment before the treatment with the surface treatment composition.

10. Use according to claim 9, wherein the surface roughening treatment is selected from chemical etching, sandblasting, lithographic patterning, 3D printing and combinations thereof.

11. Use according to any one of claims 8 - 10, wherein the surface that is treated is primarily composed of apatite, ceramic, marble or metal.

12. Use according to claim 11, wherein the surface is primarily composed of hydroxyapatite.

13. Use according to any one of the preceding claims, wherein the surface after the treatment with the surface treatment composition has an oil contact angle underwater of more than 80 degrees.

**Patentansprüche**

1. Oberflächenbehandlungszusammensetzung, die in der Lage ist, Oberflächen unter Wasser Schmutzabweisungsvermögen zu verleihen, wobei die Zusammensetzung ein reaktives Polymer enthält, das durch Formel (I) dargestellt ist:

$$(R^1O)_i(R^2)_{3-i}\text{-Si-}R^3\text{-X-pol} \qquad (I)$$

worin:

$R^1$ und $R^2$ jeweils unabhängig ausgewählt sind aus einem Wasserstoffatom und gegebenenfalls substituiertem $C_{1-20}$-Alkyl;
$R^3$ ausgewählt ist aus substituierten und unsubstituierten $C_{1-12}$-Alkylenen;
X eine Verbindungsgruppe ist;
pol ein Rest eines hydrophilen Polymers ausgewählt aus Polyethylenglycol, Polypropylenglycol, Polyvinylalkohol, Poly(vinylpyrrolidon), Polysacchariden und Copolymeren davon ist;
i = 1, 2 oder 3,
wobei die Zusammensetzung 0,01 bis 10 Gew.-% des reaktiven Polymers enthält; und
wobei die Zusammensetzung eine Zahnpasta, ein Zahnpulver oder ein Mundwasser ist.

2. Zusammensetzung nach Anspruch 1, wobei der hydrophile Polymerrest ein Rest von einem Polymer ausgewählt aus Polyethylenglycol, Polypropylenglycol und Copolymeren davon ist.

3. Zusammensetzung nach Anspruch 1 oder 2, wobei X $NR^4$, O, S oder P darstellt, wobei $R^4$ ein Wasserstoffatom oder $C_{1-3}$-Alkyl darstellt.

4. Zusammensetzung nach irgendeinem der vorhergehenden Ansprüche, wobei $R^1$ ausgewählt ist aus einem Wasserstoffatom und gegebenenfalls substituiertem $C_{1-5}$-Alkyl.

5. Zusammensetzung nach irgendeinem der vorhergehenden Ansprüche, wobei $R^2$ ausgewählt ist aus einem Wasserstoffatom und gegebenenfalls substituiertem $C_{1-5}$-Alkyl.

6. Zusammensetzung nach irgendeinem der vorhergehenden Ansprüche, wobei die Zusammensetzung eine Paste, ein Gel, eine Flüssigkeit oder ein Pulver ist.

7. Zusammensetzung nach irgendeinem der vorhergehenden Ansprüche, wobei die Zusammensetzung eine Zahnpasta ist.

8. Verwendung einer Oberflächenbehandlungszusammensetzung nach irgendeinem der vorhergehenden Ansprüche, um einer Oberfläche Schmutzabweisungsvermögen zu verleihen und/oder um einer Oberfläche antimikrobielle Eigenschaften zu verleihen, wobei die Verwendung das Behandeln der Oberfläche mit der Oberflächenbehandlungszusammensetzung umfasst.

9. Verwendung nach Anspruch 8, wobei die Oberfläche vor der Behandlung mit der Oberflächenbehandlungszusammensetzung einer Oberflächenaufrauungsbehandlung unterzogen wird.

10. Verwendung nach Anspruch 9, wobei die Oberflächenaufrauungsbehandlung ausgewählt ist aus chemischem Ätzen, Sandstrahlen, lithografischer Strukturierung, 3D-Druck und Kombinationen davon.

11. Verwendung nach irgendeinem der Ansprüche 8 - 10, wobei die Oberfläche, die behandelt wird, hauptsächlich aus Apatit, Keramik, Marmor oder Metall gebildet ist.

12. Verwendung nach Anspruch 11, wobei die Oberfläche hauptsächlich aus Hydroxyapatit gebildet ist.

13. Verwendung nach irgendeinem der vorhergehenden Ansprüche, wobei die Oberfläche nach der Behandlung mit der Oberflächenbehandlungszusammensetzung einen Ölkontaktwinkel unter Wasser von mehr als 80 Grad aufweist.

## Revendications

1. Composition de traitement de surface capable de conférer une résistance aux tâches sous-marines à des surfaces, ladite composition contenant un polymère réactif représenté par la formule (I) :

$$(R^1O)_i(R^2)_{3-i}\text{-Si-}R^3\text{-X-pol} \qquad (I)$$

dans laquelle :

R$^1$ et R$^2$ sont chacun indépendamment choisis parmi un atome d'hydrogène et un groupe alkyle en C$_{1-20}$ éventuellement substitué ;
R$^3$ est choisi parmi des alkylènes en C$_{1-12}$ substitués et non substitués ;
X est un groupe de liaison ;
pol est un résidu d'un polymère hydrophile choisi parmi le polyéthylène glycol, polypropylène glycol, poly(alcool vinylique), poly(vinylpyrrolidone), polysaccharides et copolymères de ceux-ci ;
i = 1, 2 ou 3 ;
dans laquelle la composition contient 0,01 à 10 % en masse du polymère réactif ; et
dans laquelle la composition est une pâte dentifrice, une poudre dentifrice ou un bain de bouche.

2. Composition selon la revendication 1, dans laquelle le résidu de polymère hydrophile est un résidu provenant d'un polymère choisi parmi le polyéthylène glycol, polypropylène glycol et des copolymères de ceux-ci.

3. Composition selon la revendication 1 ou 2, dans laquelle X représente NR$^4$, O, S ou P, dans laquelle R$^4$ représente un atome d'hydrogène ou un groupe alkyle en C$_{1-3}$.

4. Composition selon l'une quelconque des revendications précédentes, dans laquelle R$^1$ est choisi parmi un atome d'hydrogène et un groupe alkyle en C$_{1-5}$ éventuellement substitué.

5. Composition selon l'une quelconque des revendications précédentes, dans laquelle R$^2$ est choisi parmi un atome d'hydrogène et un groupe alkyle en C$_{1-5}$ éventuellement substitué.

6. Composition selon l'une quelconque des revendications précédentes, dans laquelle la composition est une pâte, un gel, un liquide ou une poudre.

7. Composition selon l'une quelconque des revendications précédentes, dans laquelle la composition est une pâte dentifrice.

8. Utilisation d'une composition de traitement de surface selon l'une quelconque des revendications précédentes pour conférer une résistance aux tâches à une surface et/ou pour conférer des propriétés antimicrobiennes à une surface, ladite utilisation comprenant le traitement de ladite surface avec la composition de traitement de surface.

9.  Utilisation selon la revendication 8, dans laquelle la surface est soumise à un traitement de dépolissage de surface avant le traitement avec la composition de traitement de surface.

10. Utilisation selon la revendication 9, dans laquelle le traitement de dépolissage de surface est choisi parmi une gravure chimique, un sablage, une production de motifs lithographiques, une impression 3D et des combinaisons de ceux-ci.

11. Utilisation selon l'une quelconque des revendications 8-10, dans laquelle la surface qui est traitée est principalement constituée d'apatite, céramique, marbre ou métal.

12. Utilisation selon la revendication 11, dans laquelle la surface est principalement composée d'hydroxyapatite.

13. Utilisation selon l'une quelconque des revendications précédentes, dans laquelle la surface après le traitement avec la composition de traitement de surface présente un angle de contact d'huile sous l'eau supérieur à 80 degrés.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080177022 A
- US 20100159256 A
- US 20120251718 A1
- DE 10334574 A1

- US 2002098364 A
- US 6180248 A
- JP H062555 A


**Non-patent literature cited in the description**

- **GHOSH et al.** Surface Chemical Modification of Poly(dimethylsiloxane)-Based Biomimetic Materials: Oil-Repellent Surfaces. *Appl. Mater. Interfaces,* 2009, vol. 1 (11), 2636-2644

- **GHOSH et al.** Water-Based Layer-by-Layer Surface Chemical Modification of Biomimetic Materials: Oil Repellency. *Appl. Mater. Interfaces,* 2013, vol. 5 (18), 8869-8874